# EUROPEAN PATENT APPLICATION

(11) **EP 2 144 168 A1**
(43) Date of publication of application: **13.01.2010**
(21) Application number: 09159006.7
(22) Date of filing: 29.04.2009
(51) Int. Cl.: G06F 13/10, H04L 29/08

(54) **Remote desktop control system using usb cable and method thereof**

(30) Priority: 09.07.2008 US 79434 P; 31.08.2008 US 202320
(71) Applicant: Aten International Co., Ltd., Sijhih City, Taipei 221 (TW)
(72) Inventor: Lin, Chih-Hua, 221, Sijhih City, Taipei County (TW); Lee, Chian-Feng, 235, Zhonghe City, Taipei County (TW)
(74) Representative: Brookhuis, Hendrik Jan Arnold

(57) **Abstract**

A desktop sharing and remote control system where a server and a client are connected by a connecting device using the USB protocol. The connecting device includes an ASIC which is a PC-to-PC USB connection bridge. The ASIC enumerates a first standard USB mass storage device to the server and a second standard USB mass storage device to the client. The server executes a server side application program to obtain video data representing its desktop images and transmits the video data to the first emulated mass storage device, and to receive user input device data from the first mass storage device and apply them to control the server. The client executes a client side application program to obtain keyboard and mouse data and transmits the data to the second emulated mass storage device, and receive video data from the second mass storage device and applies it to a display device.

## Description

This application claims priority from U.S. Provisional Patent Application No. 61/079,434, filed July 9, 2008 and U.S. Patent Application No. 12/202,320, filed August 31, 2008, which is herein incorporated by reference in its entirety.

### BACKGROUND OF THE INVENTION

### Field of the Invention

This invention relates to desktop sharing and remote control between two computers, and in particular, it relates to a desktop sharing and remote control system using a USB cable.

### Description of the Related Art

Conventional remote desktop control uses a network to exchange video and keyboard/mouse data. Commonly referred to as Virtual Network Computing (VNC), such a system allows one computer (client) to remotely control another computer (server). The server and client computers are connected by a network. The keyboard and mouse data are transmitted from the client to the server, and the video signals representing the server desktop image are transmitted to the client and displayed on the client's monitor. Such a system may be used, for example, to allow IT and technical support personnel to control other users' computers remotely.

USB transmission cables have been used for file transfer. For example, U.S. Patent Application Publication 2004/0230708 describes "an application method for universal serial bus (USB) file transfer cable. When USB file transfer cable is connected between two computers loaded with operating such systems as Window, Mac, Linux, etc., that support Mass Storage Class standard while the USB file transfer cable also supports Mass Storage Class, either computer can access system information provided in the USB file transfer cable. Since the application program is stored in the USB file transfer cable and the USB file transfer cable is simulated as an auto-run storage device, such as a floppy disc drive, a hard disc drive or a CD-ROM drive, etc., the USB file transfer cable in the present invention is capable of carrying out file transfers automatically without having to install drivers and programs. To users, the application method for USB file transfer cable offers plug and play capabilities as file transfers can be performed automatically between two computers without having to install drivers and programs in either computer." (Abstract.)

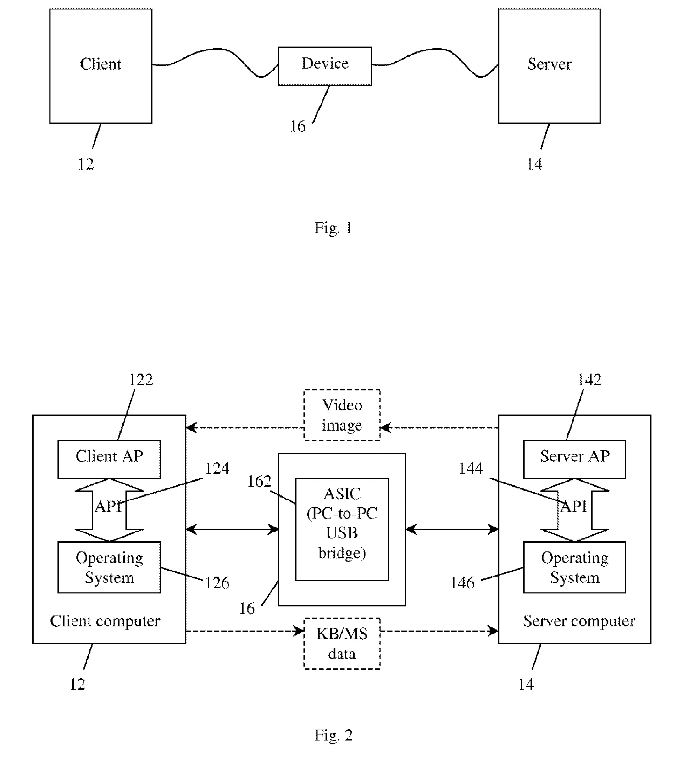

Taiwan Patent Application Publication No. 286694 also describes a USB cable device used for file transfer. As shown in Fig. 1 of this application, the USB cable includes a control unit 14 which supports Mass Storage Class, and a storage unit 16 storing an application program 162. The cable is connected between two computers, where the two computers are in a peer-to-peer configuration without directionality.

### Summary of the Invention

The present invention is directed to a remote desktop control method and apparatus.

Additional features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, the present invention provides a device for facilitating remote control of a server by a client, which includes: a control circuit adapted for connecting to the server and the client, the control circuit emulating a first mass storage device complying with a predetermined communication protocol for the client, and emulating a second mass storage device complying with the predetermined communication protocol for the server, the control circuit further transferring data between the first and second emulated mass storage devices; and a memory coupled to the control circuit, the memory storing a server side application program and a client side application program, wherein the control circuit transfers the client side application program to the first emulated mass storage device and transfers the server side application program to the second emulated mass storage device, wherein the client side application program is configured to cause the client to transmit user interface device data to the emulated first mass storage device and to receive video data representing desktop images of the server from the emulated first mass storage device, and wherein the server side application program is configured to cause the server to transmit the video data representing desktop images of the server to the emulated second mass storage device and to receive the user interface device data from the emulated second mass storage device.

In another aspect, the present invention provides a method of remotely controlling a server by a client, which includes: (a) providing a connecting device, which comprises a control circuit adapted for connecting to the server and the client, and a memory coupled to the control circuit, the memory storing a server side application program and a client side application program; (b) upon a client side of the connecting device being connected with the client, the control circuit emulating a first mass storage device complying with a predetermined communication protocol for the client; (c) upon a server side of the connecting device being connected with the server, the control circuit emulating a second mass storage device complying with the predetermined communication protocol for the server; (d) the control circuit transferring the client side application program and the server side application program to the first and second mass storage devices, respectively; (e) the second emulated mass storage device receiving video data representing desktop images from the server; (f) the control circuit transferring the video data to the first emulated mass storage device; (g) the first mass storage device outputting the video data to the client; (h) the first mass storage device receiving user interface device data from the client; (i) the control circuit transferring the user interface device data to the second mass storage device; and (j) the second mass storage device outputting the user interface device data to the server.

In another aspect, the present invention provides a method of remotely controlling a server by a client, which includes: (a) providing a connecting device, which comprises: a control circuit adapted for connecting to the server and the client, the control circuit emulating a first mass storage device complying with a predetermined communication protocol for the client, and emulating a second mass storage device complying with the predetermined communication protocol for the server, the control circuit further transferring data between the first and second emulated mass storage devices; and a memory coupled to the control circuit, the memory storing a server side application program and a client side application program, wherein the control circuit transfers the client side application program to the first emulated mass storage device and transfers the server side application program to the second emulated mass storage device, wherein the client side application program is configured to cause the client to transmit user interface device data to the emulated first mass storage device and to receive video data representing desktop images of the server from the emulated first mass storage device, and wherein the server side application program is configured to cause the server to transmit the video data representing desktop images of the server to the emulated second mass storage device and to receive the user interface device data from the emulated second mass storage device; (b) connecting a client side of the connecting device to the client; (c) connecting a client side of the connecting device to the server; and (d) controlling the server using the client.

It is to be understood that both the foregoing general description and the following detailed description are exemplary and explanatory and are intended to provide further explanation of the invention as claimed.

### Brief Description of the Drawings

Figure 1 illustrates a configuration of the desktop sharing and remote control system according to an embodiment of the present invention.

Figure 2 is a block diagram illustrating the structure of the system of Fig. 1 and also shows the data flow of video image data and keyboard/mouse data.

Figure 3 is a block diagram of the ASIC of the connecting device of Fig. 2.

Figure 4 illustrates a data exchange process executed by the client according to an embodiment of the present invention.

Figure 5 illustrates a data exchange process executed by the server according to an embodiment of the present invention.

Figure 6 is a block diagram illustrating the structure of a connecting device with the ability to differentiate client/server directions.

Figure 7 illustrates a method of using the structure of Fig. 6 to differentiate client/server directions.

Figure 8 is a block diagram illustrating the structure of another connecting device with the ability to differentiate client/server directions.

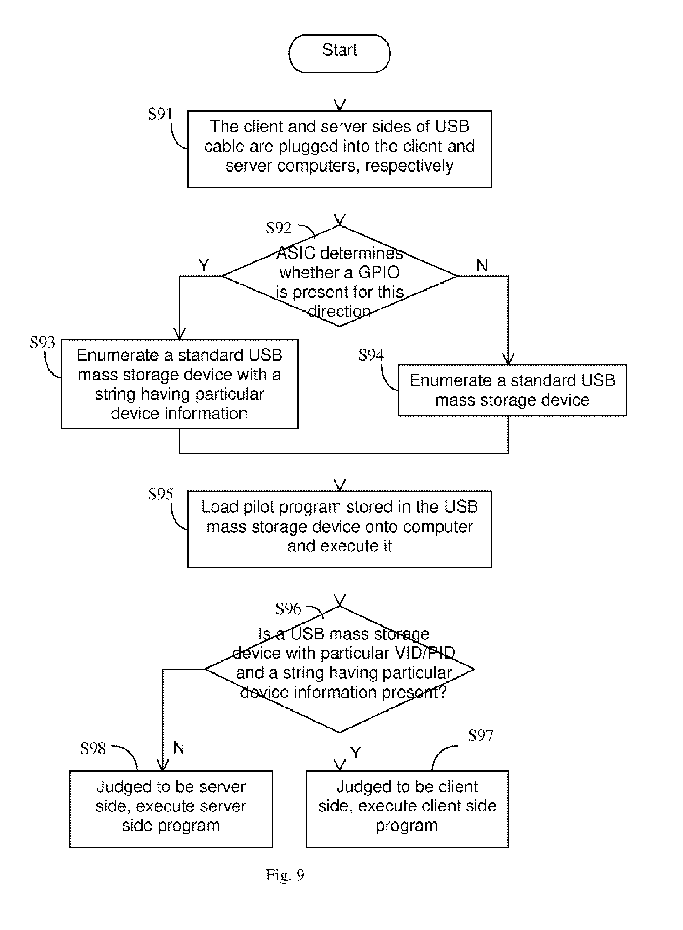

Figure 9 illustrates a method of using the structure of Fig. 8 to differentiate client/server directions.

### Detailed Description of the Preferred Embodiments

As required, a detailed illustrative embodiment of the present invention is disclosed herein. However, techniques, systems and operating structures in accordance with the present invention may be embodied in a wide variety of forms and modes, some of which may be quite different from those in the disclosed embodiment. Consequently, the specific structural and functional details disclosed herein are merely representative, yet in that regard, they are deemed to afford the best embodiment for purposes of disclosure and to provide a basis for the claims herein, which define the scope of the present invention.
The following presents a detailed description of the preferred embodiment (as well as some alternative embodiments) of the present invention.

The system according to an embodiment of the present invention has a configuration generally similar to the configuration of U.S. Patent Application Publication 2004/0230708 and Taiwan Patent Application Publication No. 286694 in that two computers are connected by a USB cable device, but in the present invention, the USB cable device is used to accomplish desktop sharing and remote control. The two computers have a client-server relationship with bi-directional data flow of video and keyboard/mouse data, where the server transmits video data representing its desktop images to the client, and the client transmits keyboard/mouse data (more generally, user interface device data) to the server to control the server.

Preferably, all video and keyboard/mouse data are obtained via the Operating System's API (Application User Interface), then packaged into packets and transmitted to the other side. At the other side, the data is extracted from the received packets by software and sent to the operating system, whereby desktop sharing and remote control between the client and server is achieved.

Further, the system according to an embodiment of the present invention uses hardware circuit or components to enable a pilot program to differentiate the client side (the controlling side) and the server side (the controlled side). The pilot program then calls corresponding client side or server side application program to be executed by the corresponding computer.

Fig. 1 illustrates an application of the present invention, where a client computer exchanges KVM (keyboard, video, mouse) data with a server computer using a USB cable to accomplish control of the server computer by the client computer. A server computer 14 (also referred to as the remote side) and a client computer 12 (also referred to as the local side) are connected to a connecting device 16. The connecting device 16 typically has a small form factor. For convenience, the connecting device 16 is sometimes referred to as a "USB cable" in this disclosure, although it will be understood that it is not a simple USB cable.

The USB cables between the connecting device 16 and the client 12 and server 14 may be formed integrally with the body of the device 16, or they may be physically separate cables plugged into respective connectors on the body of the device 16, or a combination thereof.

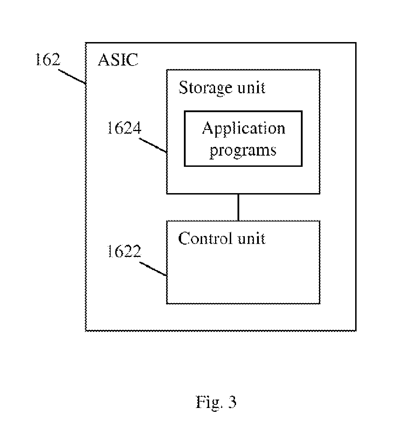

Fig. 2 is a block diagram illustrating the system of Fig. 1. The connecting device 16 includes a circuit, in this example an ASIC (application specific integrated circuit) which is a PC-to-PC USB connection bridge 162, for connecting the client and server computers. The structure of the ASIC 162, shown in Fig. 3, may be similar to the USB cable shown in Taiwan Patent Application Publication No. 286694 mentioned earlier, i.e., it may include a control unit 1622 which supports Mass Storage Class, and a storage unit 1624 which store client side and server side application programs (described in more detail later). The control unit 1622 may include its own memory (not shown) as appropriate.

The ASIC 162 performs USB device controller functions with respect to the client 12 and the server 14. It enumerates a standard USB mass storage device (emulated server side mass storage device) to the server 14 and enumerates another standard USB mass storage device (emulated client side mass storage device) to the client 12. The USB mass storage devices may be any device complying with the USB Mass Storage Class standard, such as CD-ROMs, DVD-ROMs, flash drives, hard disk drives, floppy disk drives, etc. CD-ROMs are preferred as the emulated devices because they provide convenient auto-run functions by which program stored in the CD-ROM can be automatically loaded into the host computer (the client or the server) and executed without user intervention. The ASIC 162 also transfers data between the two emulated mass storage devices.

The server AP (application program) 142 denotes a server side application program that is stored in the emulated server side mass storage device and loaded into and executed by the server computer 14. The server side application program 142 obtains video data of the server's desktop images via the API (Application Program Interface) 144 provided by the operating system 146 of the server 14, and transmits the video data to the client side over the USB cable 16 by writing to the emulated server side mass storage device. In addition, the server AP 142 receives the keyboard/mouse data from the client side by reading from the emulated server side mass storage device and uses the API 144 to apply the data to the server computer 14 to control it.

The client AP (application program) 122 denotes a client side application program that is stored in the emulated client side mass storage device and loaded into and executed by the client computer 12. The client side application program 122 obtains keyboard/mouse data of the client side via the API 124 provided by the operating system 126 of the client 12, and transmits the data to the server side over the USB cable 16 by writing to the emulated client side mass storage device. In addition, the client AP 122 receives the video data from the server side by reading from the emulated server side mass storage device and uses the API 124 to display the video data on a display device (not shown) of the client computer 12. The data flow of video image data from the server 14 to the client 12 and the keyboard/mouse data from the client 12 to the server 14 is illustrated in Fig. 2 by the dashed lines.

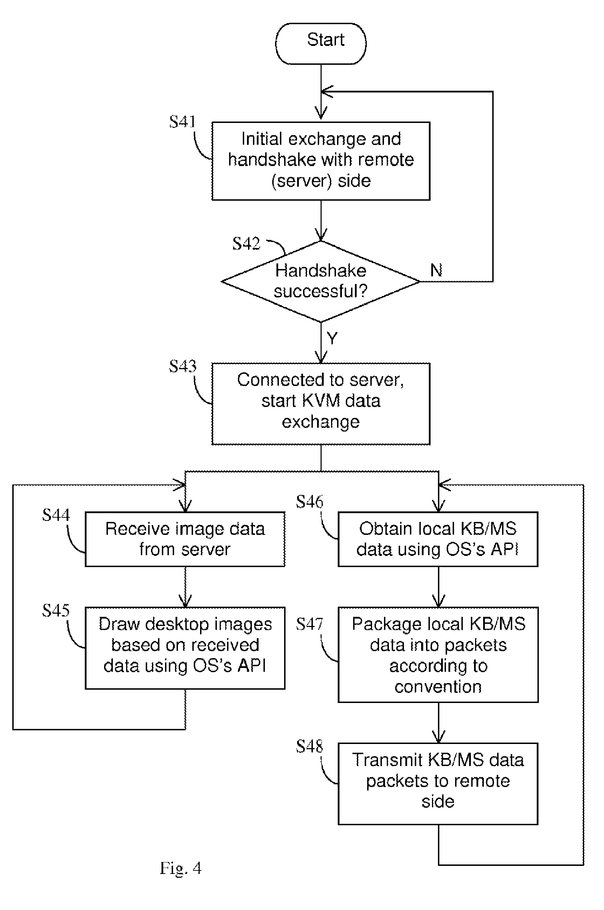

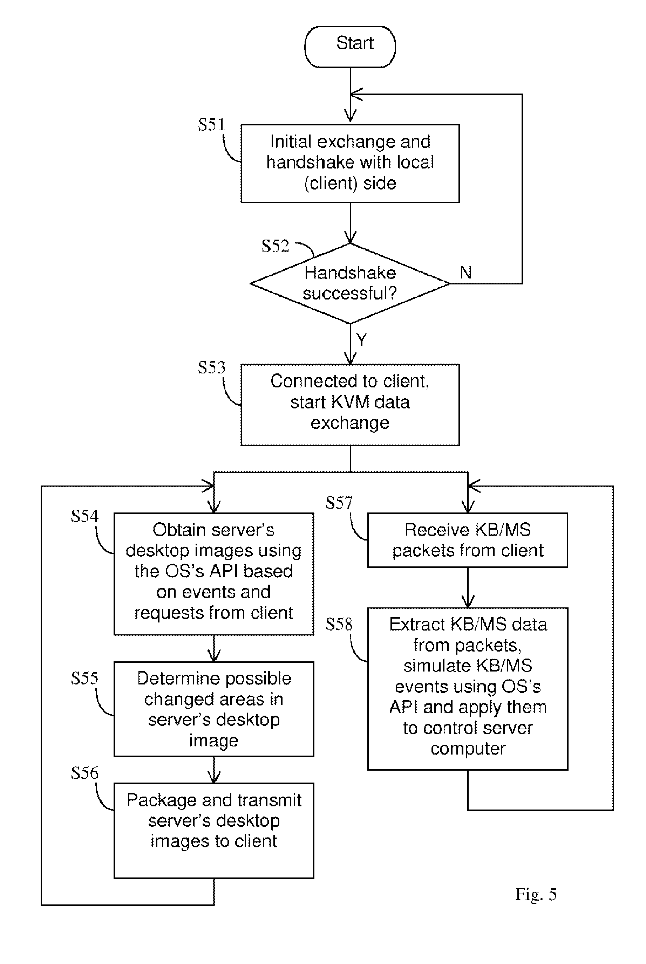

The processes executed on the client computer 12 and server computer 14 for obtaining and transmitting keyboard/mouse and video data are explained in more detail with reference to Figs. 4 and 5. Fig. 4 illustrates the process flow of the client side. The client side is responsible for providing a remote control interface for the user, displaying the desktop image of the remote (server) computer, and transmitting the client side keyboard and mouse events to the server side. As shown in Fig. 4, the client first perform handshake with the remote (server) side to exchange necessary information (step S41). The handshake is repeated if not successful ("N" in step S42). After the connection is successfully established ("Y" in step S42), exchange of KVM (Keyboard, Video, Mouse) data begins (step S43). Two processes are concurrently and continuously performed (steps S44 - S45, and steps S46 - S48). For video data, the client receives the video data from the server (step S44), and uses the API provided by the server's operating system to draw the desktop images based on the received video data (step S45). In the Windows example, the BitBit program can be used to draw the images. Steps S44 - S45 are repeated to continuously receive the video data and draw the desktop images.

For keyboard/mouse data, the local side (client) obtains the local keyboard/mouse data using the API provided by the client's operating system (step S46). In the Windows example, Windows Message can be used to obtain keyboard and mouse data. For the keyboard, WM_KEYDOWN, WM_KEYUP, WM_SYSKEYDOWN and WM_SYSKEYUP may be used to obtain the keyboard clicks; for the mouse, WM_LBUTTONDOWN, WM_LBUTTONUP, WM_MBUTTONDOWN, WM_MBUTTONDOWN, WM_MBUTTONUP, WM_RBUTTONDOWN, WM_RBUTTONUP, and WM_MOUSEMOVE may be used to obtain mouse movement/position and button click conditions. Then, the client packages the local keyboard/mouse data into packets according to a convention previously agreed upon between the two computers (step S47), and transmits the keyboard/mouse data packets to the remote side (step S48) over the USB cable. Steps S46 - S48 are repeated to continuously obtain and transmit the keyboard/mouse data.

Fig. 5 illustrates the process flow of the server side. The server side is responsible for obtaining video data of the desktop of the server computer, receiving the keyboard/mouse data from the client, and simulating keyboard/mouse events on the server to control the server. As shown in Fig. 5, the server first performs handshake with the client (step S51). The handshake is repeated if not successful ("N" in step S52). After the connection is successfully established ("Y" in step S52), exchange of KVM (Keyboard, Video, Mouse) data begins (step S53). Two processes are concurrently and continuously performed (steps S54 - S56, and steps S57 - S58). For video data, the server analyzes the desktop images based on the various image changes or events and the requests from the client side, and obtains the server's desktop images using the API provided by the operating system (step S54). In the Windows example, the BitBlt program may be used to obtain desktop images. The server determines possible changed areas in server's desktop image (step S55), packages the data into packets and transmits the desktop images as video data packets to the client side over the USB cable (step S56). Steps S54 - S56 are repeated to continuously obtain and transmit the desktop images.

For keyboard and mouse, the server receives the keyboard/mouse data packets from the client side (step S57), extracts the keyboard/mouse events from the packets, and simulates keyboard/mouse events on the server using the API provided by the operating system to control the server (step S58). In the Windows example, the keybd_event program may be used to simulate keyboard events, and the mouse_event program may be used to simulate mouse events. Steps S57 - S58 are repeated to continuously receive and apply the keyboard and mouse events.

Methods of differentiating the client side/server directionality are described below. Because the operation of the system is based on a client/server model, the client side application program 122 should be executed automatically when the client side of the cable 16 is plugged into the client computer 12, and the server side application program 142 should be executed automatically when the server side of the cable 16 is plugged into the server computer 14. The ASIC 162 is a PC-to-PC (peer-to-peer) device and does not inherently have any directionality. Thus, a hardware component or circuit is provided in the connecting device 16 to impart directionality. A pilot program is provided in the connecting device 16 that can differentiate the client and server side directions based on information provided in the hardware circuit or component, and can call the corresponding client side program or server side program. Two methods for differentiating the directions are described below.

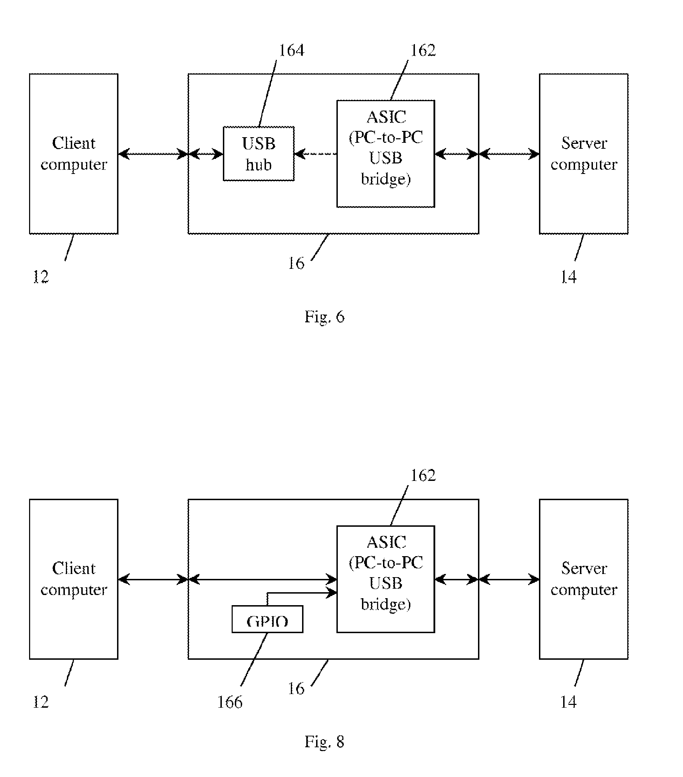

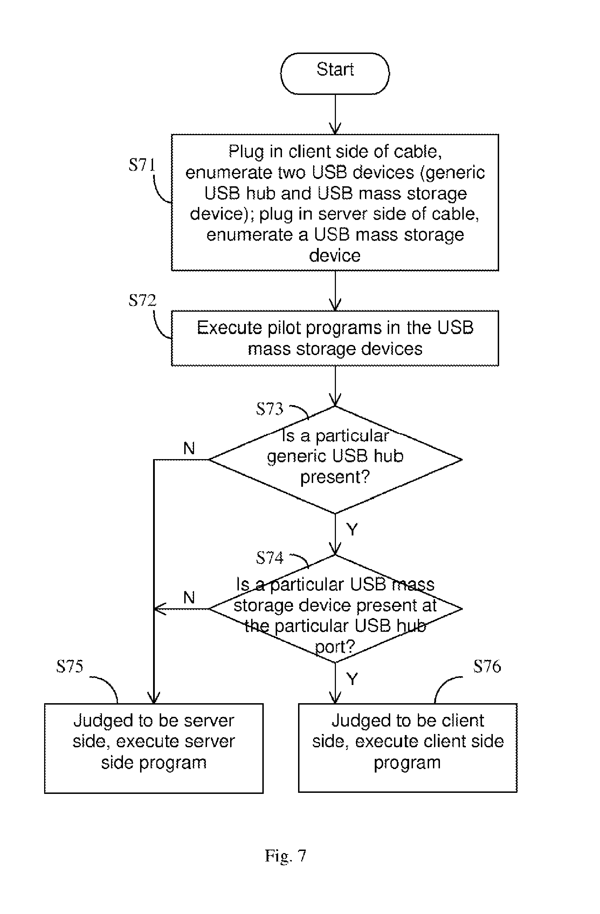

Referring to Fig. 6, the first method uses a hardware component, namely a USB hub 164, provided in the connecting device 16. The ASIC 162 is connected to the downstream port of the USB hub 164, and the upstream port of the USB hub 164 is to be connected to the client computer 12. Referring to Fig. 7, when the client side of the connecting device 16 is plugged into the client computer 12, the connecting device enumerates two USB devices to the client 12, one being a generic USB hub, the other being a standard USB mass storage device (the client side mass storage device) (step S71). If the user opens the Device Manager of the client 12 when the client side of the cable 16 is plugged in to the client 12, the user will see a generic USB hub and a USB mass storage device. When the server side of the USB cable 16 is plugged into the server computer 14, the USB cable enumerates a standard USB mass storage device (the server side mass storage device) to the server (step S71).

Each mass storage device stores a pilot program for differentiating the client/server directionality, and the pilot programs are executed after the respective computers are connected (step S72). When each pilot program is executed, it queries the operating system of the connected computer whether a particular USB mass storage device is present at the downstream port of a particular generic USB hub, judged by previously defined USB VID (vendor ID) and USB PID (product ID) of the USB devices (steps S73 and S74). If it is ("Y" in step S73 and "Y" in step S74), that side is determined to be the client side, and the client side application program is loaded from the USB mass storage device into the connected computer (the client) and executed (step S75). If it is not ("N" in step S73 or "N" in step S74), that side is determined to be the server side, and the server application program is loaded from the USB mass storage device into the connected computer (the server) and executed (step S76).

Referring to Fig. 8, the second method uses a hardware circuit, namely a GPIO (General Purpose I/O) circuit 166, provided in the connecting device 16. The GPIO 166 is connected to the client side of the ASIC 162, and provides a basis for the ASIC 162 to enumerate different USB mass storage devices to the client 12 and server 14. Referring to Fig. 7, when the client and server sides of the cable 16 are plugged into the client 12 and server 14, respectively (step S91), if the ASIC 162 determines that a direction has the GPIO 166 connected to it ("Y" in step S92), then that direction is the client side, and the ASIC enumerates to the connected computer (the client) a USB mass storage device with a string having predetermined particular device information (step S93). If the ASIC 162 determines that a direction does not have the GPIO 166 ("N" in step S92), then that direction is the server side, and the ASIC enumerates to the connected computer (the server) a USB mass storage device without the string having predetermined particular device information (step S94). Such enumeration will enable the pilot program to determine the server or client directions.

The pilot program stored in the respective mass storage device is loaded onto the connected computer (the client or the server) and executed (step S95). The pilot program queries the operating system of the computer whether a USB mass storage device with a string having predetermined specific device information is present (step S96). If it is, the side is determined to be the client side, and the client side application program is loaded from the USB mass storage device into the connected computer (the client) and executed (step S97). If it is not, the side is determined to be the server side, and the server application program is loaded from the USB mass storage device into the connected computer (the server) and executed (step S98).

As an alternative to the above two methods, directionality may be provided in the ASIC 162 itself. In other words, rather than a peer-to-peer device, the ASIC 162 may be designed to have two different directions or sides. The server side of the ASIC 162 will emulate a USB mass storage device that stores the server side application program, and the client side of the ASIC will emulate a USB mass storage device that stores the client side application program.

The connecting device 16 can be designed to be compatible with different operating system platforms. To accomplish this, multiple client side and server side application programs for different operating systems are stored in the ASIC 162 and presented to the client 12 and server 14 via the emulated USB mass storage devices. The operating systems of the client 12 and server 14 will automatically select the programs compatible with the particular operating systems to execute.

The remote desktop control system and method according to an embodiment of the present invention have several advantages. First, connection is established as soon as the client side and server side application programs are executed. As long as both the client side program and the server side programs are executed, regardless of the order, the connection is automatically established and the two computers can begin to carry out the desktop sharing and remote control. Second, the bi-directional data flow used by this system is suitable for a remote desktop control application, and is flexible in adapting to other applications. Third, it does not use emulated keyboard/mouse devices for the server side. The remote control is solely done by software and the operating system, providing greater compatibility with various platforms.

It will be apparent to those skilled in the art that various modification and variations can be made in the remote desktop control method and apparatus of the present invention without departing from the spirit or scope of the invention. Thus, it is intended that the present invention cover modifications and variations that come within the scope of the appended claims and their equivalents.

## Claims

1. A device for facilitating remote control of a server by a client, comprising:
a control circuit adapted for connecting to the server and the client, the control circuit emulating a first mass storage device complying with a predetermined communication protocol for the client, and emulating a second mass storage device complying with the predetermined communication protocol for the server, the control circuit further transferring data between the first and second emulated mass storage devices; and
a memory coupled to the control circuit, the memory storing a server side application program and a client side application program, wherein the control circuit transfers the client side application program to the first emulated mass storage device and transfers the server side application program to the second emulated mass storage device,
wherein the client side application program is configured to cause the client to transmit user interface device data to the emulated first mass storage device and to receive video data representing desktop images of the server from the emulated first mass storage device, and
wherein the server side application program is configured to cause the server to transmit the video data representing desktop images of the server to the emulated second mass storage device and to receive the user interface device data from the emulated second mass storage device.

2. The device of claim 1, wherein the client side application program is configured to cause the client to transmit the user interface device data to the emulated first mass storage device as packets, and the server side application program is configured to cause the server to transmit the video data to the emulated second mass storage device as packets, and wherein the server side application program is configured to cause the server to extract the user interface device data from the packets received from the second emulated mass storage device and to apply the extracted data to the server, and wherein the client side application program is configured to cause the client to extract the video data from the packets received from the first emulated mass storage device and to display it on a display device of the client.

3. The device of claim 1, wherein the client side application program is configured to obtain the user interface device data via API (Application Program Interface) provided by an operating system of the client, and wherein the server side application program is configured to obtain the video data representing desktop images of the server via API provided by an operating system of the server.

4. The device of claim 1, wherein the predetermined communication protocol is the Universal Serial Bus (USB) protocol.

5. The device of claim 1, wherein the control circuit and the memory are implemented in an ASIC (application specific integrated circuit).

6. The device of claim 1, further comprising:
a USB hub having an upstream port adapted for connecting to the client and a downstream port connected to the control circuit,
wherein the control circuit emulates a generic USB hub and a standard USB mass storage device to the client,
wherein the memory stores a pilot program and transfers the pilot program to the first emulated mass storage device and the second emulated mass storage device, and
wherein the pilot program is configured to query the operating system of the client or server whether a particular generic USB hub is present and, based on the response of the operating system, to load and execute either the client side application program or the server side application program.

7. The device of claim 1, further comprising:
a GPIO (general purpose I/O) circuit connected to a client side of the control circuit,
wherein the control circuit emulates to the client a USB mass storage device with a string having predetermined particular device information,
wherein the memory stores a pilot program and transfers the pilot program to the first emulated mass storage device and the second emulated mass storage device, and
wherein the pilot program is configured to query the operating system of the client or server whether a USB mass storage device with a string having predetermined particular device information is present and, based on the response of the operating system, to load and execute either the client side application program or the server side application program.

8. A method of remotely controlling a server by a client, comprising:
(a) providing a connecting device, which comprises a control circuit adapted for connecting to the server and the client, and a memory coupled to the control circuit, the memory storing a server side application program and a client side application program;
(b) upon a client side of the connecting device being connected with the client, the control circuit emulating a first mass storage device complying with a predetermined communication protocol for the client;
(c) upon a server side of the connecting device being connected with the server, the control circuit emulating a second mass storage device complying with the predetermined communication protocol for the server;
(d) the control circuit transferring the client side application program and the server side application program to the first and second mass storage devices, respectively;
(e) the second emulated mass storage device receiving video data representing desktop images from the server;
(f) the control circuit transferring the video data to the first emulated mass storage device;
(g) the first mass storage device outputting the video data to the client;
(h) the first mass storage device receiving user interface device data from the client;
(i) the control circuit transferring the user interface device data to the second mass storage device; and
(j) the second mass storage device outputting the user interface device data to the server.

9. The method of claim 8, wherein the user interface device data received via the emulated first mass storage device are packets, and the video data received via the emulated second mass storage device are packets, and wherein the method further comprises:
(k) the server extracting the user interface device data from the packets and applying the extracted data to the server; and
(l) the client extracting the video data from the packets and displaying it on a display device of the client.

10. The method of claim 8, wherein the client side application program causes the client to obtain the user interface device data via API (Application Program Interface) provided by the operating system of the client, and wherein the server side application program causes the server to obtain the video data representing desktop images of the server via API (Application Program Interface) provided by the operating system of the server.

11. The method of claim 8, wherein the predetermined communication protocol is the Universal Serial Bus (USB) protocol.

12. The method of claim 8, wherein the control circuit and the memory are implemented in an ASIC (application specific integrated circuit).

13. The method of claim 8,
wherein the connecting device includes a USB hub having an upstream port adapted for connecting to the client and a downstream port connected to the control circuit, and wherein the memory stores a pilot program ;
wherein step (b) includes the control circuit emulating a generic USB hub and a standard USB mass storage device to the client;
wherein step (d) includes transferring the pilot program to the first and second emulated mass storage device;
the method further comprising:
(m) the pilot program querying the operating system of the client or server whether a particular generic USB hub is present and, based on the response of the operating system, loading and executing either the client side application program or the server side application program.

14. The method of claim 8,
wherein the connecting device includes a GPIO (general purpose I/O) circuit connected to a client side of the control circuit, and wherein the memory stores a server side pilot program and a client side pilot program, and the control circuit transfers the client side pilot program to the first emulated mass storage device and transfers the server side pilot program to the second emulated mass storage device, and;
wherein step (b) includes the control circuit emulating a USB mass storage device with a string having predetermined particular device information;
wherein step (d) includes transferring the pilot program to the first and second emulated mass storage device;
the method further comprising:
(m) the pilot program querying the operating system of the client or server whether a USB mass storage device with a string having predetermined particular device information is present and, based on the response of the operating system, to load and execute either the client side application program or the server side application program.

15. A method of remotely controlling a server by a client, comprising:
(a) providing a connecting device, which comprises:
a control circuit adapted for connecting to the server and the client, the control circuit emulating a first mass storage device complying with a predetermined communication protocol for the client, and emulating a second mass storage device complying with the predetermined communication protocol for the server, the control circuit further transferring data between the first and second emulated mass storage devices; and
a memory coupled to the control circuit, the memory storing a server side application program and a client side application program, wherein the control circuit transfers the client side application program to the first emulated mass storage device and transfers the server side application program to the second emulated mass storage device,
wherein the client side application program is configured to cause the client to transmit user interface device data to the emulated first mass storage device and to receive video data representing desktop images of the server from the emulated first mass storage device, and
wherein the server side application program is configured to cause the server to transmit the video data representing desktop images of the server to the emulated second mass storage device and to receive the user interface device data from the emulated second mass storage device;
(b) connecting a client side of the connecting device to the client;
(c) connecting a client side of the connecting device to the server; and
(d) controlling the server using the client.
